# EUROPEAN PATENT APPLICATION

(11) **EP 3 249 131 A1**
(43) Date of publication of application: **29.11.2017**
(21) Application number: 16740264.3
(22) Date of filing: 21.01.2016
(51) Int. Cl.: E04D 5/10, B32B 27/00, B32B 27/40

(54) **UNDERLAY CUSHIONING SHEET AND WATERPROOF STRUCTURE**

(30) Priority: 21.01.2015 JP 2015009353
(71) Applicant: Dyflex Corporation, Shinjuku-ku, Tokyo 163-0825 (JP)
(72) Inventor: YOKOCHI Yasuhiro, Funabashi-shi Chiba 273-0027 (JP); ODA Urara, Funabashi-shi Chiba 273-0027 (JP); MASUDA Rui, Funabashi-shi Chiba 273-0027 (JP); KUMAGAI Kenji, Funabashi-shi Chiba 273-0027 (JP)
(74) Representative: Sika Patent Attorneys
(86) International application number: PCT/JP2016/051739
(87) International publication number: WO 2016/117657

(57) **Abstract**

Provided is an underlay cushioning sheet that is arranged on the surface of a foundation and that has a waterproof coating film formed thereon. The underlay cushioning sheet is provided with a cushioning layer having an overlay surface and a curing acceleration layer having a coating film formation surface on the opposite side from the overlay surface. A waterproof coating film comprising a polyurethane resin is formed on the coating film formation surface of the curing acceleration layer by applying a one pack-type liquid waterproofing material. The curing acceleration layer comprises a reactive material that is capable of reacting with the liquid waterproofing material. The reactive material either (1) comprises a functional group that is capable of reacting with an isocyanate included in the liquid waterproofing material or (2) reacts with a latent curing agent included in the liquid waterproofing material and generates a functional group that is capable of reacting with the components of the liquid waterproofing material.

## Description

### Technical Field

The present invention relates to an underlay cushioning sheet which is laid on a foundation comprising concrete or the like before forming a waterproof coating film by applying a liquid waterproofing material when waterproofing the foundation, and also relates to a waterproof structure that uses this underlay cushioning sheet.

The present application claims priority on the basis of patent application no. 2015-009353, which was filed in Japan on 21 January 2015, and the contents of that patent application are cited here.

### Background Art

When waterproofing floors (foundations) comprising concrete or the like in the past, it was commonplace to arrange waterproof sheets (underlay cushioning sheets) on a floor or the like, coat the underlay cushioning sheets with a liquid waterproofing material, and then cure the liquid waterproofing material so as to form a waterproof coating film.

Underlay cushioning sheets have the effect of not only being waterproof, but also cushioning forces applied by people walking on the underlay cushioning sheet or by concrete shrinking. Materials comprising mainly polyolefins, vinyl chloride, vulcanized rubber, asphalt and rubber asphalt are commonly used as underlay cushioning sheets.

### Citation List

### Patent Literature

Patent Document 1: Japanese Patent Application Publication No. 2004-36324

### Summary of the Invention

### Technical Problem

Waterproofing materials comprising polyurethane resins include one pack-type (moisture curing type) and two pack-type materials.

One pack-type waterproofing materials have the advantage of being easy to use because there is no need to measure out liquids and carry out stirring and the like.

Commonly used one pack-type (moisture curing type) liquid waterproofing materials can be classified into 2 types. One is a type in which curing occurs by moisture in the air reacting directly with an isocyanate component in the liquid waterproofing material. The other is a type in which the liquid waterproofing material contains at least 2 components, that is, contains component 1 and component 2. Component 2 does not react with component 1, but forms component 2' upon contact with moisture in the air, and curing progresses as a result of component 2' reacting with component 1. Component 2 is generally known as a latent curing agent.

However, in all one pack-type (moisture curing type) waterproofing materials, curing progresses as a result of the waterproofing material reacting with moisture in the air, which leads to the problem that curing progresses from the surface of a coating film and time is required for the inner part of the coating film to be cured. This problem is particularly significant in low-temperature low-humidity environments, such as during winter. Therefore, one pack-type waterproofing materials have the problem that a long time is required to cure a liquid waterproofing material, which lengthens work periods. One means for solving this problem is to add water to a one pack-type waterproofing material together with a catalyst that accelerates curing, and mix and disperse the water and the catalyst in the waterproofing material, but stirring is required in the case of waterproof structures obtained using this means, which results in the advantage of using a one pack-type waterproofing material being lost. In addition, if the added quantity of water is increased in order to shorten the curing time, the pot life of the liquid waterproofing material is reduced, which has an effect on coating efficiency.

With these circumstances in mind, the purpose of the present invention is to provide an underlay cushioning sheet which can increase the curing speed of a coating film and shorten work periods when carrying out waterproofing by means of a one pack-type (moisture curing type) waterproofing material and which does not impair ease of application; and a waterproof structure using same.

### Solution to Problem

A first aspect of the present invention is an underlay cushioning sheet that is arranged on the surface of a foundation and that has a waterproof coating film formed thereon, wherein the underlay cushioning sheet is provided with a cushioning layer having an overlay surface overlaid on the foundation and a curing acceleration layer having a coating film formation surface on the opposite side from the overlay surface. The coating film formation surface of the curing acceleration layer is a waterproof coating film formed by applying a one pack-type liquid waterproofing material comprising a polyurethane resin, the curing acceleration layer contains a reactive material that is capable of reacting with the liquid waterproofing material, and the reactive material falls within the scope of [1] or [2] below.
[1] A reactive material having a functional group that is capable of reacting with an isocyanate contained in the liquid waterproofing material.
[2] A reactive material that reacts with a latent curing agent contained in the liquid waterproofing material and generates a functional group that is capable of reacting with the components of the liquid waterproofing material.

The functional group of the reactive material of [1] is preferably at least one type of group selected from among a hydroxyl group, an amino group, a thiol group and a carboxyl group.

The functional group generated by the reactive material of [2] is at preferably least one type of group selected from among an isocyanate group, a hydroxyl group, an amino group, a thiol group and a carboxyl group.

The reactive material is preferably water.

The curing acceleration layer is preferably formed by impregnating a sheet material comprising a liquid-absorbing material with a liquid that contains the reactive material.

It is preferable for air passage grooves to be formed in the overlay surface of the cushioning layer.

A second aspect of the present invention is a waterproof structure in which a waterproof coating film is formed by applying a one pack-type liquid waterproofing material to the coating film formation surface of the underlay cushioning sheet.

### Advantageous Effects of Invention

According to the present invention, because a curing acceleration layer having a coating film formation surface contains a reactive material that is capable of reacting with the components of the liquid waterproofing material, curing progresses not only in the surface layer region of a liquid waterproofing material layer, but also in a deep layer region. Therefore, it is possible to increase the curing speed of the liquid waterproofing material and shorten work periods even in low-temperature low-humidity environments, such as during winter, when curing reaction speed tends to decrease.

In the present invention, because a one pack-type polyurethane resin is used in the waterproof coating film, there is no need to measure out liquids and carry out stirring and the like, meaning that good installation operability and operational efficiency can be achieved. In addition, unlike cases in which water is added to a liquid waterproofing material and mixed, the pot life of the liquid waterproofing material is not shortened, meaning that there is no adverse effect on coating efficiency.

### Brief Description of Drawings

FIG. 1 is a schematic perspective view that shows an embodiment of the underlay cushioning sheet of the present invention and an example in which this underlay cushioning sheet is laid.
FIG. 2 is a schematic cross-sectional view that shows the underlay cushioning sheet shown in FIG. 1.
FIG. 3 is a schematic cross-sectional view that shows a waterproof structure that uses the underlay cushioning sheet shown in FIG. 1.

### Description of Embodiments

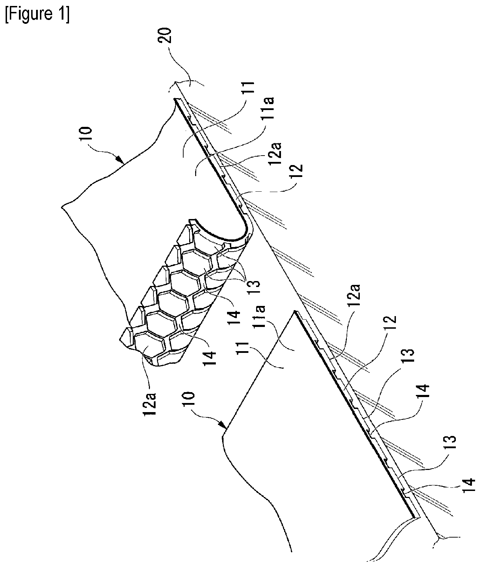

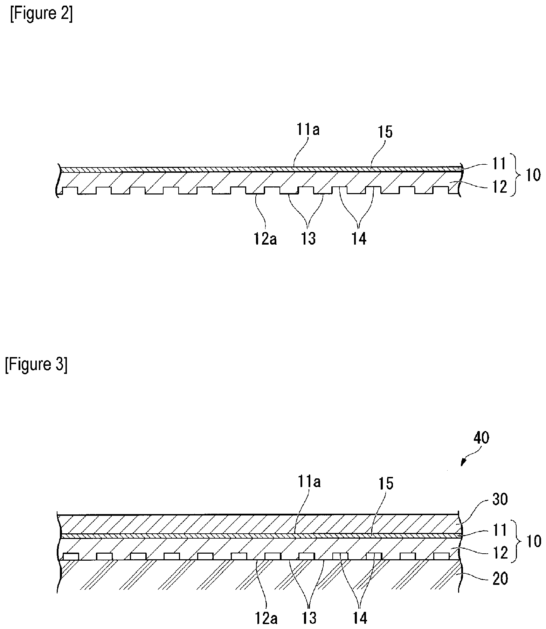

The present invention will now be explained in detail. FIG. 1 is a schematic perspective view that shows an underlay cushioning sheet 10 that is an embodiment of the underlay cushioning sheet of the present invention. FIG. 2 is a schematic cross-sectional view that shows the underlay cushioning sheet 10. FIG. 3 is a schematic cross-sectional view that shows a waterproof structure 40 that uses the underlay cushioning sheet 10.

As shown in FIG. 3, the waterproof structure 40 is a structure in which a waterproof coating film 30 comprising a polyurethane resin is formed on the underlay cushioning sheet 10 that is laid on a foundation 20.

The waterproof coating film 30 is formed by applying a one pack-type (moisture curing type) liquid waterproofing material comprising a polyurethane resin. One pack-type (moisture curing type) liquid waterproofing materials can be classified into 2 types. One is a type in which curing occurs by moisture in the air reacting directly with an isocyanate component in the liquid waterproofing material. This type is known as the first type.

The other is a type in which the liquid waterproofing material contains at least 2 components, that is, contains component 1 and component 2. Component 2 does not react with component 1, but forms component 2' upon contact with moisture in the air, and curing progresses as a result of component 2' reacting with component 1. Component 2 is generally known as a latent curing agent. This type is known as the second type.

A waterproofing material of the first type contains, for example, a polyisocyanate and a polyol.

Examples of polyisocyanates include low molecular weight isocyanate compounds such as diphenylmethane-4,4'-diisocyanate (MDI), carbodiimide-modified diphenylmethane diisocyanates (liquid MDI), polymethylene polyphenyl isocyanates (crude MDI), 2,4-tolylene diisocyanate (2,4-TDI), 2,6-tolylene diisocyanate (2,6-TDI), xylylene diisocyanate (XDI) and hexamethylene diisocyanate.

The polyol is not particularly limited as long as the polyol contains 2 or more hydroxyl groups, but examples thereof include polyether polyols, polyester polyols and poly(tetramethylene glycol).

A waterproofing material of the first type may be, for example, a urethane prepolymer obtained by reacting a polyisocyanate and a polyol.

A waterproofing material of the second type contains, for example, a polyisocyanate (component 1) and a latent curing agent (component 2).

The polyisocyanates listed as polyisocyanates able to be used in a waterproofing material of the first type can be used as this polyisocyanate (component 1). The urethane prepolymer mentioned above can be used as the polyisocyanate (component 1).

The latent curing agent reacts with water and generates active hydrogen groups. Latent curing agents include hydrolysis type latent curing agents and thermal latent curing agents.

Hydrolysis type latent curing agents do not function as curing agents in water-free environments, but hydrolyze and function as curing agents under conditions where water (moisture) is present. Examples of hydrolysis type latent curing agents include oxazolidine compounds and ketimine compounds.

Thermal latent curing agents do not function as curing agents at ordinary temperatures, but melt, dissolve or activate and function as curing agents when a certain quantity of heat or more is applied. Examples of thermal latent curing agents include dicyandiamide and imidazole compounds.

As shown in FIG. 1 and FIG. 2, the underlay cushioning sheet 10 has a waterproof cushioning layer 12 and a curing acceleration layer 11 laminated on a surface of the cushioning layer. The underlay cushioning sheet 10 is laid so as to cover the surface of the foundation 20 comprising concrete or the like, so that the cushioning layer 12 faces the foundation 20.

In FIG. 1, the surface of the foundation 20 is an approximately level floor, and one or more underlay cushioning sheets 10 are laid on the surface of the foundation 20. In FIG. 1, a plurality of underlay cushioning sheets 10 are laid, and this plurality of underlay cushioning sheets 10 are joined to each other by means of a fixing tool or the like (not shown).

Materials comprising mainly polyolefins, vinyl chloride, vulcanized rubber, asphalt and rubber asphalt are preferred as the cushioning layer 12.

The cushioning layer 12 exhibits elasticity and, when laid on the foundation 20, can absorb impacts, which are caused by people walking on the underlay cushioning sheet 10, by means of elastic deformation of projections 13.

Air passage grooves 14 function as spaces for facilitating elastic deformation of the projections 13.

A multiplicity of projections 13 are formed on the lower surface 12a of the cushioning layer 12 that faces the foundation 20, and air passage grooves 14 formed between these projections 13 are formed in a mesh-like manner across the whole of the lower surface of the cushioning layer 12. The lower surface 12a corresponds to the lower surface of the underlay cushioning sheet 10. The lower surface 12a is also known as an "overlay surface 12a".

When roll forming the underlay cushioning sheet 10 using, for example, a roll equipped with a mold, the projections 13 and air passage grooves 14 can be formed by pressing the mold of the roll against the cushioning layer 12.

Because mold release properties are increased by the projections 13 and the air passage grooves 14, it is not necessary to add a lubricant or the like to the material that forms the cushioning layer 12. Therefore, the underlay cushioning sheet 10 exhibits good adhesive properties when bonded to the foundation 20 using an adhesive or the like.

Moreover, the projections 13 have a hexagonal shape in FIG. 1, but the projections 13 can have a variety of shapes, such as circular, rectangular or rhomboid.

The curing acceleration layer 11 is a layer containing a reactive material described below.

The curing acceleration layer 11 can be formed by, for example, impregnating a reactive liquid containing a reactive material in a base fabric 15 laminated on the surface of the cushioning layer 12.

The base fabric 15 is a sheet material comprising, for example, a liquid-absorbing material. The base fabric 15 is formed as a fabric or mash from single fibers or bundled fibers, such as a woven fabric (cloth), a non-woven fabric (cloth) or a net cloth (a mesh cloth), or is obtained by combining a plurality of these.

The base fabric 15 is preferably formed as a thin fabric from the perspective of the cushioning layer 12 being able to follow uneven parts of the foundation 20. Specifically, the thickness of the base fabric 15 can be, for example, 0.1-2 mm (and preferably 0.1-1 mm).

The fibers that constitute the base fabric 15 can be natural fibers such as cotton or hemp, synthetic fibers comprising thermoplastic resins such as polyesters, nylon, polypropylene, polyethylene, acrylic resins and ethylene-vinyl acetate copolymers, and inorganic fibers such as glass fibers and carbon fibers. Of these, a non-woven fabric comprising a polyester can be advantageously used from the perspective of ensuring adhesive properties to the cushioning layer 12 and the waterproof coating film 30.

The reactive material is capable of reacting with the liquid waterproofing material. Specifically, the reactive material falls within the scope of [1] or [2] below.
[1] A reactive material having a functional group that is capable of reacting with an isocyanate contained in the liquid waterproofing material.
[2] A reactive material that reacts with a latent curing agent included in the liquid waterproofing material and generates a functional group that is capable of reacting with the components of the liquid waterproofing material.

In [1], the "functional group that is capable of reacting with an isocyanate included in the liquid waterproofing material" is, for example, a functional group containing active hydrogen, and examples thereof include at least one type from among hydroxyl groups (-OH), amino groups (-NH₂ etc.), thiol groups (-SH) and carboxyl groups (-COOH). Of these, hydroxyl groups and amino groups are particularly preferred from the perspective of obtaining a waterproof structure 40 having excellent long-term stability.

As this functional group, it is possible to use only one type of group selected from among hydroxyl groups, amino groups, thiol groups and carboxyl groups, or a combination of two or more types thereof.

Examples of reactive materials having a hydroxyl group include compounds such as water, vinyl alcohol-based compounds and saponified compounds. Of these, water is particularly preferred.

Poly(vinyl alcohol) (PVA), ethylene-vinyl alcohol copolymers (EVOH), ethylene-vinyl acetate-vinyl alcohol copolymers, and the like, can be used as vinyl alcohol-based compounds.

Examples of saponified compounds include saponified ethylene-vinyl acetate copolymers.

Reactive materials having amino groups include polyaminostyrene and polyvinylamine. In addition, it is possible to use compounds obtained by incorporating amino groups in styrene-butadiene copolymers.

Examples of reactive materials having thiol groups include 1,2-ethanedithiol and 1,2-propanedithiol. Examples of reactive materials having carboxyl groups include poly(acrylic acid) and carboxymethyl cellulose.

In [2] above, that is, in the "reactive material that reacts with a latent curing agent included in the liquid waterproofing material and generates a functional group that is capable of reacting with the components of the liquid waterproofing material", the functional group that is capable of reacting with the components of the liquid waterproofing material is at least one type of group selected from among, for example, isocyanate groups, hydroxyl groups, amino groups, thiol groups and carboxyl groups.

As this functional group, it is possible to use only one type of group selected from among isocyanate groups, hydroxyl groups, amino groups, thiol groups and carboxyl groups, or a combination of two or more types thereof.

Examples of reactive materials that generate a hydroxyl group include compounds such as water, vinyl alcohol-based compounds and saponified compounds. Of these, water is particularly preferred.

Poly(vinyl alcohol) (PVA), ethylene-vinyl alcohol copolymers (EVOH), ethylene-vinyl acetate-vinyl alcohol copolymers, and the like, can be used as vinyl alcohol-based compounds.

Examples of saponified compounds include saponified ethylene-vinyl acetate copolymers.

Examples of reactive materials that generate an amino group include water.

The reactive material may be dissolved in water and impregnated into the base fabric 15 as a reactive liquid.

A catalyst for accelerating the curing reaction of the liquid waterproofing material (for example, a metal salt of an organic acid, an organometallic compound, or the like) may be added to the reactive material.

A method for laying the underlay cushioning sheet of this embodiment will now be explained with reference to FIG. 1 and FIG. 3.

As shown in FIG. 1 and FIG. 3, in a waterproofing method that uses the underlay cushioning sheet 10, the surface of the foundation 20 is first cleaned, and an underlay primer (not shown) is then applied to the foundation 20.

The underlay primer applied to the surface of the foundation 20 is used to increase adhesion of the underlay cushioning sheet 10 to the foundation 20.

A room temperature-curable urethane resin; an epoxy resin; or a commonly used primer such as a solvent or emulsion comprising chloroprene, an acrylic compound, or the like, can be advantageously used as the underlay primer.

A method comprising spraying the underlay primer with a spray gun or a method comprising applying the underlay primer with a roller, brush or rake is preferred as the method for applying the underlay primer to the foundation 20.

Moreover, the step of applying an underlay primer may be omitted, depending on the surface condition of the foundation 20.

Next, the underlay cushioning sheet 10 is laid on the surface of the foundation 20. The underlay cushioning sheet 10 is laid in such a way that the surface 12a of the cushioning layer 12 that is opposite the side to be bonded to the base fabric 15 (the overlay surface 12a) faces the foundation 20.

In this way, the underlay cushioning sheet 10 is in a state whereby the surface 11a of the curing acceleration layer 11 that is opposite the side to be bonded to the cushioning layer 12 (the coating film formation surface 11a) is exposed.

The underlay cushioning sheet 10 may be fixed to the foundation 20 by means of a fixing tool (a tacker, a spike with a washer, a bevel nail, a pin, or the like) that passes through the sheet and is driven into the foundation 20.

Next, a one pack-type (moisture curing type) liquid waterproofing material is applied to a surface (the coating film formation surface 11a) of the curing acceleration layer 11 of the underlay cushioning sheet 10, and the waterproof coating film 30 is formed by curing this liquid waterproofing material layer. In this way, the waterproof structure 40 comprising the underlay cushioning sheet 10 and the waterproof coating film 30 is formed.

The liquid waterproofing material can be applied using, for example, a spray gun, a roller, a trowel or a rake. In cases where the liquid waterproofing material is a liquid waterproofing material of the first type, the isocyanate reacts with water in outside air and is cured in the surface layer region of this layer comprising the liquid waterproofing material. An example of the curing reaction is as follows.

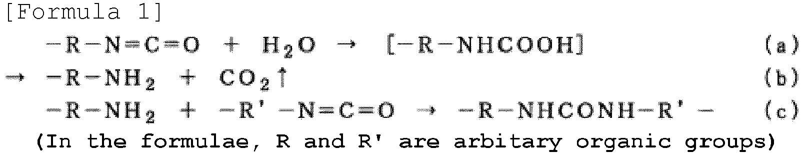

Because the curing acceleration layer 11 that contains a reactive material such as water is formed on the surface of the underlay cushioning sheet 10, curing progresses by means of a reaction with the reactive material even in a deep layer region that includes the lower surface of the liquid waterproofing material layer.

For example, if the reactive material is water, curing progresses by means of reactions (a) to (c) shown above in a deep layer region. Curing progresses by means of reactions similar to reactions (a) to (c) even in the case of hydroxyl group-containing reactive materials other than water.

In the case of amino group-containing reactive materials, curing progresses as a result of amino groups (-NH₂) reacting with isocyanate groups (-N=C=O) in the liquid waterproofing material to form urea bonds (-NH-C(=O)-NH-).

In the case of thiol group-containing reactive materials, curing progresses as a result of thiol groups (-SH) reacting with isocyanate groups (-N=C=O) in the liquid waterproofing material to form thiourethane bonds (-S-C(=O)-NH-).

In the case of carboxyl group-containing reactive materials, curing progresses as a result of carboxyl groups (-COOH) reacting with isocyanate groups (-N=C=O) in the liquid waterproofing material to ultimately form amide bonds (-NH-C(=O)-) via a carbamic acid anhydride.

In a surface layer region of a layer comprising a liquid waterproofing material of the second type, the latent curing agent reacts with water in outside air to generate a compound having a functional group that contains active hydrogen, and curing progresses as a result of the compound having active hydrogen reacting with an isocyanate.

For example, in cases where the latent curing agent is an oxazolidine compound, the oxazolidine compound reacts with moisture in outside air and undergoes hydrolysis, the oxazolidine ring generates a secondary amino group and an alcoholic hydroxyl group, and curing progresses as a result of these groups reacting with an isocyanate.

In cases where the latent curing agent is a ketimine compound, the ketimine compound reacts with water to generate an amine. Curing progresses as a result of this amine reacting with an isocyanate.

In a deep layer region that includes the lower surface of the liquid waterproofing material layer, the latent curing agent reacts with the reactive material to generate a compound having a functional group that includes active hydrogen, and curing progresses as a result of this active hydrogen-containing compound reacting with an isocyanate.

In cases where the latent curing agent reacts with the reactive material to generate an isocyanate group-containing compound, curing progresses as a result of this isocyanate group-containing compound reacting with a polyol in the liquid waterproofing material.

According to this underlay cushioning sheet 10, because the curing acceleration layer 11 having the coating film formation surface 11a contains a reactive material that is capable of reacting with the components of the liquid waterproofing material, curing progresses not only in the surface layer region of a liquid waterproofing material layer, but also in a deep layer region. Therefore, it is possible to increase the curing speed of the liquid waterproofing material and shorten work periods even in low-temperature low-humidity environments, such as during winter, when curing reaction speed tends to decrease.

Because a one pack-type polyurethane resin is used in the waterproof coating film 30, there is no need to measure out liquids and carry out stirring and the like, meaning that good installation operability and efficiency can be achieved. In addition, unlike cases in which water is added to a liquid waterproofing material and mixed, the pot life of the liquid waterproofing material is not shortened, meaning that there is no adverse effect on coating operability.

Moreover, this invention is not limited to the embodiments described above, and it is possible to make appropriate selections within limits that do not deviate from the gist of this invention.

In the embodiments given above, the curing acceleration layer 11 is constituted by impregnating the base fabric 15 with a reactive liquid that contains a reactive material, but the constitution of the curing acceleration layer 11 is not limited to this, and the curing acceleration layer 11 may be a coating film formed by applying a reactive liquid that contains a reactive material to a surface of the cushioning layer 12 and then curing. In this case, it is not necessary to use a sheet material.

When installing the waterproof coating film 30, an indication may be formed by means of printing or the like on the surface of the underlay cushioning sheet 10 in order to provide a guide for the quantity of liquid waterproofing material to be applied (the coating thickness). By using a semitransparent liquid waterproofing material and confirming the degree of concealment of the indication on the surface of the underlay cushioning sheet 10, it becomes easier to ensure the required thickness of the waterproof coating film 30. Therefore, it is possible to prevent occurrence of locations where the liquid waterproofing material coating film is extremely thin and reliably ensure waterproofness.

It is preferable for the polyurethane resin used in the liquid waterproofing material to be flexible at the time of curing. If the waterproof coating film 30 is flexible, the waterproof coating film 30 can deform and follow deformations caused by curvature in the foundation 20, and the like, and is therefore unlikely to break.

### Industrial Applicability

The present invention relates to an underlay cushioning sheet which is laid on a foundation comprising concrete or the like before forming a waterproof coating film by applying a liquid waterproofing material when waterproofing the foundation, and also relates to a waterproof structure that uses this underlay cushioning sheet.

According to the present invention, it is possible to increase the curing speed of the liquid waterproofing material and shorten work periods even in low-temperature low-humidity environments, such as during winter.

### Explanation of the Numerals

10: underlay cushioning sheet
11: curing acceleration layer
11a: coating film formation surface
12: cushioning layer
12a: overlay surface
13: projection
14: air passage groove
15: base fabric
20: foundation
30: waterproof coating film
40: waterproof structure

## Claims

1. An underlay cushioning sheet that is arranged on the surface of a foundation and that has a waterproof coating film formed thereon, wherein
the underlay cushioning sheet is provided with a cushioning layer having an overlay surface overlaid on the foundation and a curing acceleration layer having a coating film formation surface on the opposite side from the overlay surface,
the coating film formation surface of the curing acceleration layer is a surface on which a waterproof coating film is formed by applying a one pack-type liquid waterproofing material comprising a polyurethane resin,
the curing acceleration layer contains a reactive material that is capable of reacting with the liquid waterproofing material, and
the reactive material falls within the scope of [1] or [2] below.
[1] A reactive material having a functional group that is capable of reacting with an isocyanate contained in the liquid waterproofing material.
[2] A reactive material that reacts with a latent curing agent contained in the liquid waterproofing material and generates a functional group that is capable of reacting with the components of the liquid waterproofing material.

2. The underlay cushioning sheet as claimed in claim 1, wherein the functional group of the reactive material of [1] is at least one type of group selected from among a hydroxyl group, an amino group, a thiol group and a carboxyl group.

3. The underlay cushioning sheet as claimed in claim 1, wherein the functional group generated by the reactive material of [2] is at least one type of group selected from among an isocyanate group, a hydroxyl group, an amino group, a thiol group and a carboxyl group.

4. The underlay cushioning sheet as claimed in any one of claims 1 to 3, wherein the reactive material is water.

5. The underlay cushioning sheet as claimed in any one of claims 1 to 4, wherein the curing acceleration layer is formed by impregnating a sheet material comprising a liquid-absorbing material with a liquid that contains the reactive material.

6. The underlay cushioning sheet as claimed in any one of claims 1 to 5, wherein air passage grooves are formed in the overlay surface of the cushioning layer.

7. A waterproof structure in which a waterproof coating film is formed by applying a one pack-type liquid waterproofing material to the coating film formation surface of the underlay cushioning sheet as claimed in any one of claims 1 to 6.
